# EUROPEAN PATENT APPLICATION

(11) **EP 4 772 708 A1**
(43) Date of publication of application: **08.07.2026**
(21) Application number: 24893045.5
(22) Date of filing: 27.09.2024
(51) Int. Cl.: E04H 4/16, A01K 63/10

(54) **METHOD FOR CONTROLLING CLEANING DEVICE AND CLEANING DEVICE**

(30) Priority: 21.11.2023 CN 202311563357
(71) Applicant: Shenzhen Mammotion Innovation Co., Limited, Shenzhen, Guangdong 518000 (CN)
(72) Inventor: WEI, Jidong, Shenzhen, Guangdong 518000 (CN); HUA, Jinfeng, Shenzhen, Guangdong 518000 (CN)
(74) Representative: Chung, Hoi Kan
(86) International application number: PCT/CN2024/121942
(87) International publication number: WO 2025/107886

(57) **Abstract**

A control method for a cleaning device and a cleaning device are provided. The cleaning device comprises a driving mechanism and a roller brush mechanism. The roller brush mechanism comprises a first roller brush, a second roller brush, a first operating member, and a second operating member. The first operating member is connected to the first roller brush, and the second operating member is connected to the second roller brush. The control method comprises: controlling the driving mechanism to move so that the driving mechanism drives at least one of the first roller brush or the second roller brush to rotate, thereby driving at least one of the first operating member or the second operating member to rotate; and in response to first current position information of the first operating member and second current position information of the second operating member satisfying a first position condition, controlling the driving mechanism to stop rotating. Wherein, the first position condition comprises: a first operating portion of the first operating member and a second operating portion of the second operating member are both at least partially exposed to the outside of the cleaning device. For the control method for a cleaning device and the cleaning device provided by the present disclosure, disassembly of the roller brush mechanism of the cleaning device is convenient.

## Description

This application claims priority to Chinese Patent Application No. 202311563357.6, filed on November 21, 2023 with the China National Intellectual Property Administration and titled "Control Method for Cleaning Device and Cleaning Device," the entire disclosure of which is incorporated herein by reference in its entirety.

### Technical Field

The present disclosure relates to the field of display technologies, and specifically relates to a displaying method for mowing operation area and a related apparatus.

### Background Art

In relevant technologies, a cleaning device usually includes a body and a roller brush mechanism. The body is connected to the roller brush mechanism, and the roller brush mechanism is capable of rotating relative to the body to clean a surface to be cleaned. However, when it is necessary to detach the roller brush mechanism for replacement or maintenance, etc., disassembly of the roller brush mechanism is inconvenient.

### Summary

The present disclosure provides a control method for a cleaning device and a cleaning device, aimed at making disassembly of the roller brush mechanism convenient.

The present disclosure provides a control method for a cleaning device, wherein the cleaning device includes a driving mechanism and a roller brush mechanism, the roller brush mechanism includes a first roller brush, a second roller brush, a first operating member, and a second operating member, the first operating member is connected to the first roller brush, and the second operating member is connected to the second roller brush; the control method includes:
controlling the driving mechanism to move so that the driving mechanism drives at least one of the first roller brush or the second roller brush to rotate, thereby driving at least one of the first operating member or the second operating member to rotate; and in response to first current position information of the first operating member and second current position information of the second operating member satisfying a first position condition, controlling the driving mechanism to stop rotating; wherein the first position condition includes: a first operating portion of the first operating member and a second operating portion of the second operating member are both at least partially exposed to the outside of the cleaning device.

In the control method of the present disclosure, the first position condition further includes: the second operating portion is located in a preset plane, the preset plane passing through an axis of the roller brush mechanism and the first operating portion; or, the first position condition further includes: the second operating portion and the first operating portion are arranged along a preset straight line, the preset straight line being parallel to the axis of the roller brush mechanism.

In the control method of the present disclosure, controlling the driving mechanism to rotate so that the driving mechanism drives at least one of the first roller brush or the second roller brush to rotate includes: in response to the first current position information and the second current position information satisfying a second position condition, controlling the driving mechanism to rotate so that the driving mechanism drives at least one of the first roller brush or the second roller brush to rotate; wherein the second position condition includes at least one of: at least one of the first operating portion or the second operating portion is not exposed to the outside of the cleaning device; or the second operating portion is not located in the preset plane.

In the control method of the present disclosure, the first position condition further includes: a central angle of projections of the first operating portion and the second operating portion on a cross-section of the roller brush mechanism is less than or equal to 40°.

In the control method of the present disclosure, the first roller brush includes a first roller brush body and a first telescopic member; the second roller brush includes a second roller brush body and a second telescopic member; the control method further includes: in response to the first current position information and the second current position information satisfying the first position condition, the first operating member is capable of driving the first telescopic member to move, so that the first roller brush is capable of being detached from the driving mechanism; and the second operating member is capable of driving the second telescopic member to move, so that the second roller brush is capable of being detached from the driving mechanism.

In the control method of the present disclosure, the roller brush mechanism further includes a first elastic member and a second elastic member; in response to the first current position information and the second current position information satisfying the first position condition, the first operating member is capable of driving the first telescopic member to move along an axial direction of the first roller brush body, so that the first telescopic member outside the first roller brush body at least partially retracts into the first roller brush body, thereby enabling the first roller brush to be detached from the driving mechanism; and the first telescopic member is capable of applying a force to the first elastic member under drive of the first operating member.

In response to the first current position information and the second current position information satisfying the first position condition, the second operating member is capable of driving the second telescopic member to move along an axial direction of the second roller brush body, so that the second telescopic member outside the second roller brush body at least partially retracts into the second roller brush body, thereby enabling the second roller brush to be detached from the driving mechanism; and the second telescopic member is capable of applying a force to the second elastic member under drive of the second operating member.

In the control method of the present disclosure, the driving mechanism includes a first driving member and a second driving member, controlling the driving mechanism to move so that the driving mechanism drives at least one of the first roller brush or the second roller brush to rotate, thereby driving at least one of the first operating member or the second operating member to rotate, includes: controlling at least one of the first driving member or the second driving member to move, to drive at least one of the first roller brush or the second roller brush to rotate, thereby driving at least one of the first operating member or the second operating member to rotate.

In the control method of the present disclosure, controlling at least one of the first driving member or the second driving member to move, to drive at least one of the first roller brush or the second roller brush to rotate, thereby driving at least one of the first operating member or the second operating member to rotate, includes: controlling the first driving member to move with a first motion parameter and controlling the second driving member to move with a second motion parameter, so that the first driving member and the second driving member respectively drive the first roller brush and the second roller brush to rotate, thereby respectively driving the first operating member and the second operating member to rotate.

In the control method of the present disclosure, the first motion parameter includes at least one of: a first rotational angular velocity or a first rotational direction; and the second motion parameter includes at least one of: a second rotational angular velocity or a second rotational direction.

In the control method of the present disclosure, controlling at least one of the first driving member or the second driving member to move, includes: controlling the first driving member and the second driving member to move respectively at a first rotational angular velocity and a second rotational angular velocity, the first rotational angular velocity being different from the second rotational angular velocity in magnitude.

In the control method of the present disclosure, the first roller brush is rotatably connected to the second roller brush; controlling the driving mechanism to move so that the driving mechanism drives at least one of the first roller brush or the second roller brush to rotate, includes: controlling the driving mechanism to move, so that the driving mechanism is capable of respectively and independently driving the first roller brush and the second roller brush to rotate.

In the control method of the present disclosure, the control method further includes: obtaining the first current position information of the first operating member and the second current position information of the second operating member detected by a position detection mechanism.

In the control method of the present disclosure, the control method further includes: upon receiving a preset removal signal, obtaining a working state of the cleaning device detected by a state sensor, the working state including a rotational angular velocity of the driving mechanism; and if a current rotational angular velocity of the driving mechanism is greater than a preset speed threshold, controlling the driving mechanism to perform at least two decelerations, so that the rotational angular velocity of the driving mechanism after deceleration is less than or equal to the preset speed threshold.

In the control method of the present disclosure, the control method further includes: obtaining hand usage habits set by a user; and determining a relative positional relationship between the first operating portion and the second operating portion according to the hand usage habits, the relative positional relationship including a first relative positional relationship or a second relative positional relationship; wherein the first relative positional relationship includes: the first operating portion and the second operating portion are spaced apart along a first line, and the first operating portion is closer to a bottom of the cleaning device than the second operating portion; and the second relative positional relationship includes: the first operating portion and the second operating portion are spaced apart along a second line, and the second operating portion is closer to the bottom of the cleaning device than the first operating portion, the first line and the second line intersecting.

In the control method of the present disclosure, the control method further includes: upon receiving a preset removal signal, obtaining a working state of the cleaning device detected by a state sensor, the working state including a first state and a second state, the second state including a rollover state or a flip state; wherein the cleaning device is capable of performing a cleaning operation in the first state, an area of the first operating portion exposed to the outside when the cleaning device is in the second state is greater than an area of the first operating portion exposed to the outside when the cleaning device is in the first state, and an area of the second operating portion exposed to the outside when the cleaning device is in the second state is greater than an area of the second operating portion exposed to the outside when the cleaning device is in the first state; and in response to the working state of the cleaning device being the first state, controlling the driving mechanism to work so that the cleaning device switches to the second state.

The present disclosure further provides a cleaning device, including: a driving mechanism; and a roller brush mechanism, including a first roller brush, a second roller brush, a first operating member, and a second operating member, the first operating member being connected to the first roller brush, and the second operating member being connected to the second roller brush; wherein the cleaning device is used for performing steps of the control method as described above.

In the cleaning device of the present disclosure, the cleaning device further includes: a first position sensor, including a first trigger member and a first sensing member, the first trigger member being disposed on the roller brush mechanism, a position of the first sensing member being set corresponding to a position of the first trigger member, and the first sensing member being configured to sense position information of the first trigger member, so as to detect the first current position information of the first operating member; and
a second position sensor, including a second trigger member and a second sensing member, the second trigger member being disposed on the roller brush mechanism, and the second sensing member being configured to sense position information of the second trigger member, so as to detect the second current position information of the second operating member.

In the cleaning device of the present disclosure, the first trigger member and the second trigger member are respectively disposed at two ends of the roller brush mechanism; or, the first trigger member and the second trigger member are both disposed in a middle of the roller brush mechanism.

The present disclosure further provides a cleaning device, including:
a driving mechanism; and a roller brush mechanism, including a first roller brush, a second roller brush, a first operating member, and a second operating member, the first operating member being connected to the first roller brush, and the second operating member being connected to the second roller brush; wherein the cleaning device is used for performing steps of the control method as described above.

It should be understood that the general description above and the detailed description below are only exemplary and explanatory and cannot limit the disclosure of the embodiments of the present disclosure.

### Brief Description of the Drawings

To describe the technical solutions of the embodiments of the present disclosure more clearly, the drawings required for describing the embodiments will be briefly introduced below. Apparently, the drawings described below are some embodiments of the present disclosure. For those of ordinary skill in the art, other drawings can also be obtained based on these drawings without creative labor.
FIG. 1 is a structural schematic diagram of a cleaning device provided according to an embodiment of the present disclosure;
FIG. 2 is a structural schematic diagram of a cleaning device provided according to an embodiment of the present disclosure;
FIG. 3(A) is a structural schematic diagram of a roller brush mechanism provided according to an embodiment of the present disclosure;
FIG. 3(B) is a structural schematic diagram of a roller brush mechanism provided according to an embodiment of the present disclosure;
FIG. 4 is a cross-sectional view of a roller brush mechanism provided according to an embodiment of the present disclosure;
FIG. 5 is a partial structural schematic diagram of a cleaning device provided according to an embodiment of the present disclosure;
FIG. 6 is a partial structural schematic diagram of a roller brush mechanism provided according to an embodiment of the present disclosure;
FIG. 7 is a structural schematic diagram of a cleaning device provided according to an embodiment of the present disclosure;
FIG. 8 is a partial structural schematic diagram of a cleaning device provided according to an embodiment of the present disclosure;
FIG. 9 is a cross-sectional view of a cleaning device provided according to an embodiment of the present disclosure;
FIG. 10 is a schematic diagram of a control method for a cleaning device provided according to an embodiment of the present disclosure;
FIG. 11 is a structural schematic diagram of a roller brush mechanism provided according to an embodiment of the present disclosure;
FIG. 12 is a structural schematic diagram of a roller brush mechanism provided according to an embodiment of the present disclosure.

### Detailed Description of Embodiments

The technical solutions in the embodiments of the present disclosure will be described clearly and completely below with reference to the drawings in the embodiments of the present disclosure. Obviously, the described embodiments are only some, rather than all, of the embodiments of the present disclosure. Based on the embodiments in the present disclosure, all other embodiments obtained by those of ordinary skill in the art without creative labor shall fall within the protection scope of the present disclosure.

In the description of the present disclosure, it should be understood that orientation or positional relationships indicated by terms such as "center", "longitudinal", "transverse", "length", "width", "thickness", "top", "bottom", "front", "rear", "left", "right", "vertical", "horizontal", "top", "bottom", "inner", "outer", "clockwise", "counterclockwise", and the like are based on the orientation or positional relationship shown in the drawings, and are only for the convenience of describing the present disclosure and simplifying the description, rather than indicating or implying that the device or element must have a specific orientation, be constructed and operated in a specific orientation, and therefore cannot be understood as a limitation of the present disclosure. In addition, the terms "first" and "second" are only used for descriptive purposes and cannot be understood as indicating or implying relative importance or implicitly indicating the number of indicated technical features. Thus, features defined with "first" and "second" can explicitly or implicitly include one or more of the features. In the description of the present disclosure, "multiple" means two or more, unless otherwise specifically defined.

It should also be understood that the terms used in the specification of the present disclosure are only for the purpose of describing specific embodiments and are not intended to limit the present disclosure. As used in the specification of the present disclosure and the appended claims, the singular forms "a", "an", and "the" are intended to include the plural forms unless the context clearly specifies otherwise.

It should also be further understood that the term "and/or" used in the specification of the present disclosure and the appended claims refers to any combination and all possible combinations of one or more of the associated listed items, and includes these combinations.

Some embodiments of the present disclosure will be described in detail below with reference to the drawings. In case of no conflict, the following embodiments and features in the embodiments can be combined with each other.

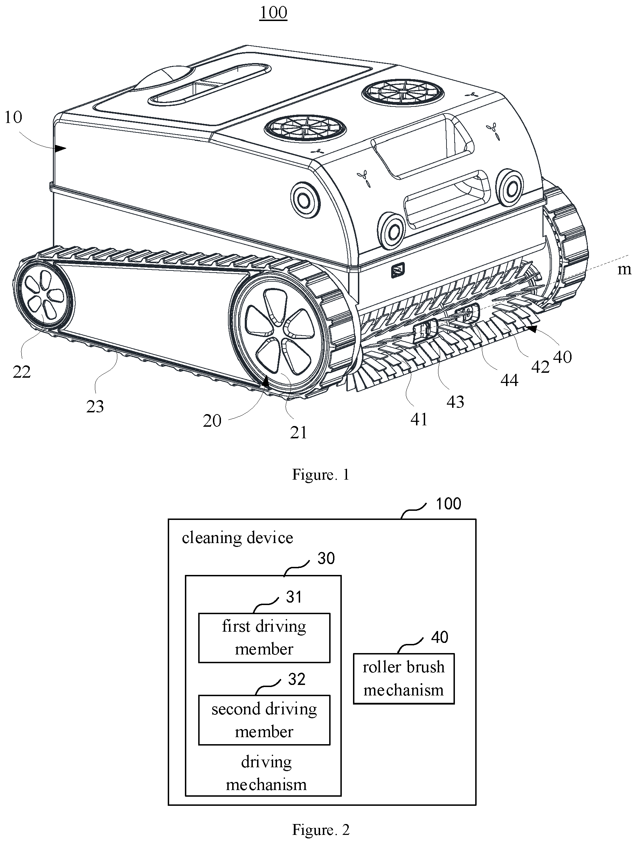

FIG. 1, an embodiment of the present disclosure provides a cleaning device 100, which is capable of cleaning dirt.

Exemplarily, the cleaning device 100 is capable of traveling in at least one of underwater, above water, or on land, so that the cleaning device 100 is capable of moving to a target area for a cleaning operation.

In some embodiments, the cleaning device 100 is capable of cleaning dirt at least one of a pool wall of a pool or a liquid within the pool. Exemplarily, the pool can include at least one of: a swimming pool, a fish pond, a landscape pond, or the like. Exemplarily, the liquid in the pool can include water or other liquids. Exemplarily, dirt includes at least one of: deposits attached to the pool wall of the pool, floating objects floating on the water (such as fallen leaves, etc.), suspended objects suspended in the water, settled debris (such as sand and stones, etc.), or the like.

Exemplarily, the cleaning device 100 is capable of cleaning dirt attached to the pool wall of the pool.

Exemplarily, the cleaning device 100 is capable of cleaning the liquid in the pool. For example, the cleaning device 100 is capable of inhaling liquid containing dirt, and the cleaning device 100 filters the liquid containing dirt, leaves the dirt at the cleaning device 100, and re-discharges the filtered liquid into the pool, thereby realizing cleaning of the liquid in the pool.

Please refer to FIG. 1, in some embodiments, the cleaning device 100 comprises a body 10 and a power mechanism 20. The power mechanism 20 is used for driving the body 10 to move, for example, for driving the body 10 to travel and/or steer. Exemplarily, the power mechanism 20 includes at least one of: a motor driving structure, a propeller structure, or the like.

Please refer to FIG. 1, exemplarily, the power mechanism 20 comprises a power motor (not labeled) and a driving wheel 21. The power motor is provided on the body 10, and the power motor is used for driving movement of the driving wheel 21, thereby driving the body 10 to travel and/or steer.

The number of the driving wheels 21 and the power motors can be designed according to actual requirements, for example, the number of the driving wheels 21 and the power motors each includes one, two, three, four, or more. Exemplarily, the number of the driving wheels 21 includes two, and each of the two driving wheels 21 is provided with a corresponding power motor. Exemplarily, the same power motor is capable of driving two driving wheels 21 to move.

Please refer to FIG. 1, in some embodiments, the power mechanism 20 further comprises a driven wheel 22 and a transmission belt 23. The transmission belt 23 is connected to the driving wheel 21 and the driven wheel 22. When the power motor drives the driving wheel 21 to rotate, the driving wheel 21 is capable of driving the transmission belt 23 and the driven wheel 22 to rotate, so that the body 10 travels and/or steers.

Please refer to FIG. 1, in some embodiments, the cleaning device 100 comprises a driving mechanism 30 (please refer to FIG. 2) and a roller brush mechanism 40. The driving mechanism 30 is used for driving the roller brush mechanism 40 to move, so that the roller brush mechanism 40 is capable of cleaning dirt, which provides a guarantee for the cleaning device 100 to clean dirt.

Exemplarily, the driving mechanism 30 can comprise the power motor of any of the embodiments described above, to reduce the number of components, which is conducive to the miniaturization and lightweight design of the product. Exemplarily, the driving mechanism 30 can also be different from the power motor described above, and is not limited herein. For example, a power motor used for driving movement of the driving wheels 21 and a driving motor used for driving movement of the roller brush mechanism 40 are provided separately.

Please refer to FIG. 2, in some embodiments, the driving mechanism 30 comprises a first driving member 31 and a second driving member 32. The first driving member 31 is used for driving a first roller brush 41 to rotate, and the second driving member 32 is used for driving a second roller brush 42 to rotate. Exemplarily, the first driving member 31 and the second driving member 32 each comprises a driving motor. Exemplarily, the first driving member 31 corresponds to the power motor of one of the driving wheels 21, and the second driving member 32 corresponds to the power motor of the other driving wheel 21, that is, the first driving member 31 is capable of driving the first roller brush 41 and one driving wheel 21 to move, and the second driving member 32 is capable of driving the second roller brush 42 and the other driving wheel 21 to move. In other embodiments, one of the first driving member 31 or the second driving member 32 can also be omitted, for example, the first roller brush 41 and the second roller brush 42 are driven to rotate synchronously by one driving member.

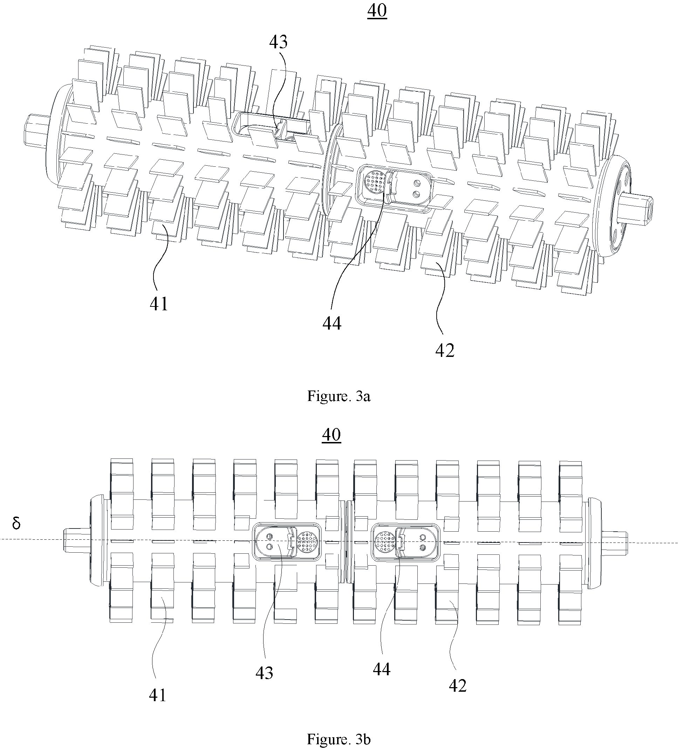

Please refer to FIG. 1, FIG. 3(A), and FIG. 3(B), in some embodiments, the roller brush mechanism 40 comprises a first roller brush 41, a second roller brush 42, a first operating member 43, and a second operating member 44. The first operating member 43 is connected to the first roller brush 41, and the second operating member 44 is connected to the second roller brush 42. Exemplarily, at least one of the first roller brush 41 or the second roller brush 42 is connected to the driving mechanism 30.

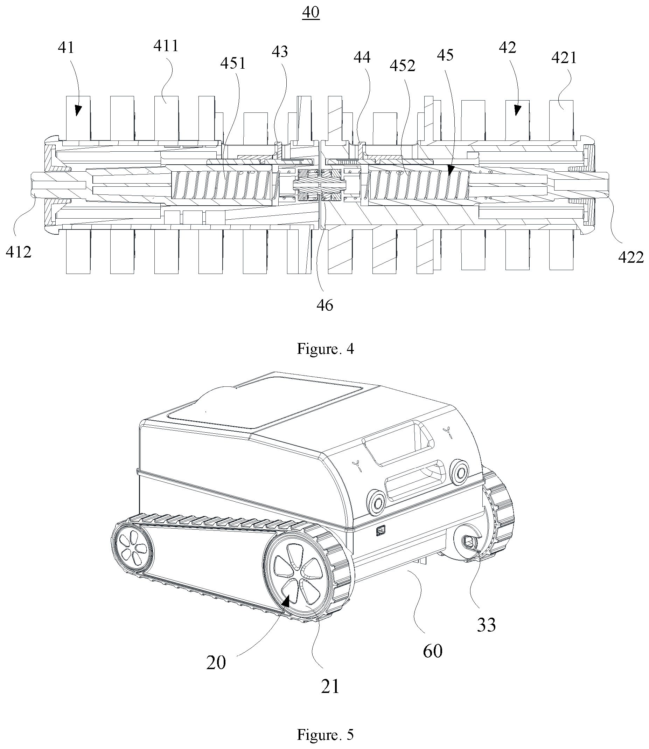

Please refer to FIG. 4, in some embodiments, the first roller brush 41 is detachably connected to at least one of the driving mechanism 30, the power mechanism 20, or the body 10, and the second roller brush 42 is detachably connected to at least one of the driving mechanism 30, the power mechanism 20, or the body 10. Thus, when the roller brush mechanism 40 needs maintenance or replacement, the roller brush mechanism 40 can be disassembled and assembled, thereby maintaining or replacing the roller brush mechanism 40, which provides a guarantee for the cleaning device 100 to perform a cleaning operation efficiently.

Please refer to FIG. 4, exemplarily, the first roller brush 41 comprises a first roller brush body 411 and a first telescopic member 412, and the second roller brush 42 comprises a second roller brush body 421 and a second telescopic member 422. The first telescopic member 412 is connected to the first operating member 43, and the second telescopic member 422 is connected to the second operating member 44. The first telescopic member 412 and the second telescopic member 422 are respectively capable of being detachably connected to the driving mechanism 30. Thus, the driving mechanism 30 is capable of driving the first telescopic member 412 and the second telescopic member 422 to move, thereby driving the first roller brush body 411 and the second roller brush body 421 to rotate, so as to clean dirt. When the roller brush mechanism 40 needs maintenance or replacement, the first operating member 43 and the second operating member 44 are respectively capable of driving the first telescopic member 412 and the second telescopic member 422 to move, so that the connection between the first telescopic member 412 and the driving mechanism 30 is loosened, and the connection between the second telescopic member 422 and the driving mechanism 30 is loosened, thereby enabling the roller brush mechanism 40 to be detached conveniently and quickly. It can be understood that the first telescopic member 412 is capable of driving the first roller brush body 411 to rotate under drive of the driving mechanism 30, and the second telescopic member 422 is capable of driving the second roller brush body 421 to rotate under drive of the driving mechanism 30; in addition, the first telescopic member 412 is capable of being under action of the first operating member 43. Exemplarily, the first telescopic member 412 passes through the first roller brush body 411, and the second telescopic member 422 passes through the second roller brush body 421.

Exemplarily, the first operating member 43 is capable of driving the first telescopic member 412 to move, so that the first telescopic member 412 within the first roller brush body 411 is capable of at least partially extending out of the first roller brush body 411 along an axial direction of the first roller brush 41; or, the first operating member 43 is capable of driving the first telescopic member 412 to move, so that the first telescopic member 412 outside the first roller brush body 411 is capable of at least partially retracting into the first roller brush body 411 along the axial direction of the first roller brush 41, so as to facilitate disassembly and assembly of the roller brush mechanism 40 and the driving mechanism 30. Exemplarily, the second operating member 44 is capable of driving the second telescopic member 422 to move, so that the second telescopic member 422 within the second roller brush body 421 is capable of at least partially extending out of the second roller brush body 421 along an axial direction of the second roller brush 42; or, the second operating member 44 is capable of driving the second telescopic member 422 to move, so that the second telescopic member 422 outside the second roller brush body 421 is capable of at least partially retracting into the second roller brush body 421 along the axial direction of the second roller brush 42, so as to facilitate disassembly and assembly of the roller brush mechanism 40 and the driving mechanism 30.

Exemplarily, the first operating member 43 is capable of moving along the axial direction of the first roller brush 41 under action of an external force, to drive extension or retraction of the first telescopic member 412. Exemplarily, the second operating member 44 is capable of moving along the axial direction of the second roller brush 42 under action of an external force, to drive extension or retraction of the second telescopic member 422.

Please refer to FIG. 5, in some embodiments, the driving mechanism 30 comprises a first mounting portion (not labeled) and a second mounting portion 33. The first mounting portion is configured to be detachably connected to the first telescopic member 412, and the second mounting portion 33 is configured to be detachably connected to the second telescopic member 422. Exemplarily, the detachable connection of the first mounting portion and the first telescopic member 412 includes at least one of: snap-fit connection, insertion connection, magnetic connection, or the like. The detachable connection of the second mounting portion 33 and the second telescopic member 422 includes at least one of: snap-fit connection, insertion connection, magnetic connection, or the like. Exemplarily, the first driving member 31 is drivingly connected to the first mounting portion, and the second driving member 32 is drivingly connected to the second mounting portion 33.

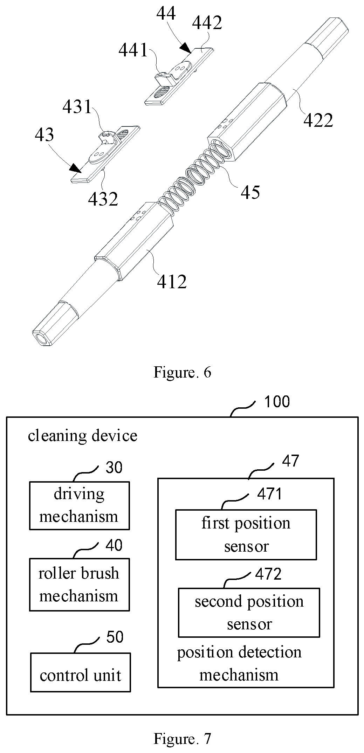

Please refer to FIG. 4 and FIG. 6, in some embodiments, the roller brush mechanism 40 further comprises an elastic structure 45. The elastic structure 45 is provided between the first telescopic member 412 and the second telescopic member 422, and is used for providing a restoration force for at least one of the first telescopic member 412 or the second telescopic member 422, so that after the force on at least one of the first operating member 43 or the second operating member 44 is withdrawn, at least one of the first telescopic member 412 or the second telescopic member 422 is capable of being reset under action of the elastic force of the elastic structure 45, which provides a guarantee for the reliable connection between the roller brush mechanism 40 and the driving mechanism 30.

Please refer to FIG. 4, in some embodiments, the elastic structure 45 comprises a first elastic member 451 and a second elastic member 452. The first telescopic member 412 and the second telescopic member 422 are respectively provided with a corresponding first elastic member 451 and second elastic member 452. Exemplarily, one end of the first elastic member 451 abuts against the first roller brush body 411, and the other end abuts against the first telescopic member 412. One end of the second elastic member 452 abuts against the second roller brush body 421, and the other end abuts against the second telescopic member 422.

Exemplarily, when the first operating member 43 drives the first telescopic member 412 to move under action of an external force to detach the roller brush mechanism 40, the first telescopic member 412 is capable of applying a force to the first elastic member 451, so that the first elastic member 451 undergoes elastic deformation; when the external force applied to the first operating member 43 is withdrawn, the first telescopic member 412 is capable of moving under the elastic force of the first elastic member 451, so that the first telescopic member 412 within the first roller brush body 411 partially extends out of the first roller brush body 411, thereby enabling the first roller brush 41 to be reliably connected to the first mounting portion. When the second operating member 44 drives the second telescopic member 422 to move under action of an external force to detach the roller brush mechanism 40, the second telescopic member 422 is capable of applying a force to the second elastic member 452, so that the second elastic member 452 undergoes elastic deformation; when the external force applied to the second operating member 44 is withdrawn, the second telescopic member 422 is capable of moving under the elastic force of the second elastic member 452, so that the second telescopic member 422 within the second roller brush body 421 partially extends out of the second roller brush body 421, thereby enabling the second roller brush 42 to be reliably connected to the second mounting portion 33.

Please refer to FIG. 6, in some embodiments, the first operating member 43 comprises a first operating portion 431 and a first connecting portion 432. The first operating portion 431 is connected to the first connecting portion 432, and the first connecting portion 432 is connected to the first telescopic member 412; the first operating portion 431 is operated so that the first operating portion 431 drives the first telescopic member 412 to move through the first connecting portion 432. The second operating member 44 comprises a second operating portion 441 and a second connecting portion 442. The second operating portion 441 is connected to the second connecting portion 442, and the second connecting portion 442 is connected to the second telescopic member 422; the second operating portion 441 is operated so that the second operating portion 441 drives the second telescopic member 422 to move through the second connecting portion 442. Exemplarily, the first operating portion 431 can be pressed or pushed so that the first operating member 43 drives the first telescopic member 412 to move; and the second operating portion 441 is pressed or pushed so that the second operating member 44 drives the second telescopic member 422 to move, thereby enabling the roller brush mechanism 40 to be detached.

Please refer to FIG. 4, in some embodiments, the roller brush mechanism 40 further comprises a connecting member 46. The first roller brush 41 is connected to the second roller brush 42 through the connecting member 46. Thus, after the roller brush mechanism 40 is connected to the driving mechanism 30, the first roller brush 41 and the second roller brush 42 are capable of rotating more smoothly and reliably under action of the driving mechanism 30.

In some embodiments, the first roller brush 41 is rotatably connected to the second roller brush 42 through the connecting member 46, so that the driving mechanism 30 is capable of respectively driving the first roller brush 41 and the second roller brush 42 to rotate through the first telescopic member 412 and the second telescopic member 422. The rotational speeds of the first roller brush 41 and the second roller brush 42 can be the same or different, and are not limited herein. Exemplarily, a first bearing (not labeled) is provided between the first roller brush 41 and the connecting member 46, and a second bearing (not labeled) is provided between the second roller brush 42 and the connecting member 46, to ensure the smoothness of rotation of the first roller brush 41 and the second roller brush 42 relative to the connecting member 46, reduce a frictional force between the connecting member 46 and the first roller brush 41, and reduce a frictional force between the connecting member 46 and the second roller brush 42.

Please refer to FIG. 7, in some embodiments, the cleaning device 100 further comprises a position detection mechanism 47. The position detection mechanism 47 is used for detecting first current position information of the first operating member 43 and second current position information of the second operating member 44. Exemplarily, in response to the first current position information and the second current position information satisfying a first position condition, it is controlled to stop rotating the driving mechanism 30; wherein the first position condition comprises: the first operating portion 431 of the first operating member 43 and the second operating portion 441 of the second operating member 44 are both at least partially exposed to the outside of the cleaning device 100. Thus, the user is capable of conveniently operating the first operating member 43 and the second operating member 44 to respectively drive at least part of the first roller brush 41 and at least part of the second roller brush 42 to move, thereby enabling the first roller brush 41 and the second roller brush 42 to be detached conveniently, making disassembly of the roller brush mechanism 40 convenient, easy, and simple.

Please refer to FIG. 7, in some embodiments, the position detection mechanism 47 can comprise a first position sensor 471 and a second position sensor 472. The first position sensor 471 is used for detecting the first current position information of the first operating member 43, and the second position sensor 472 is used for detecting the second current position information of the second operating member 44. The first position sensor 471 and the second position sensor 472 are capable of respectively obtaining the first current position information of the first operating member 43 and the second current position information of the second operating member 44, so as to reduce mutual interference when obtaining the first current position information and the second current position information, improve detection accuracy of the first current position information and the second current position information, and provide a guarantee for the cleaning device 100 to accurately control the driving mechanism 30 to drive the first operating member 43 and the second operating member 44 to move.

Exemplarily, the first position sensor 471 can be at least partially provided on at least one of the driving mechanism 30, the first roller brush body 411, the first telescopic member 412, or the first operating member 43. The second position sensor 472 can be at least partially provided on at least one of the driving mechanism 30, the second roller brush body 421, the second telescopic member 422, or the second operating member 44.

In some embodiments, the first position sensor 471 and the second position sensor 472 each can include at least one of: a magnetic position sensor, a potentiometric position sensor, a capacitive position sensor, an optical position sensor, or the like. For example, exemplarily, the first position sensor 471 and/or the second position sensor 472 comprises an encoder. As another example, the first position sensor 471 comprises a Hall element (not labeled) and a magnetic element (not labeled), and the magnetic element is provided at the first mounting portion, the first roller brush body 411, the first telescopic member 412, or the first operating member 43. Exemplarily, the magnetic element includes a magnet. The second position sensor refers to the first position sensor, and is not repeated herein.

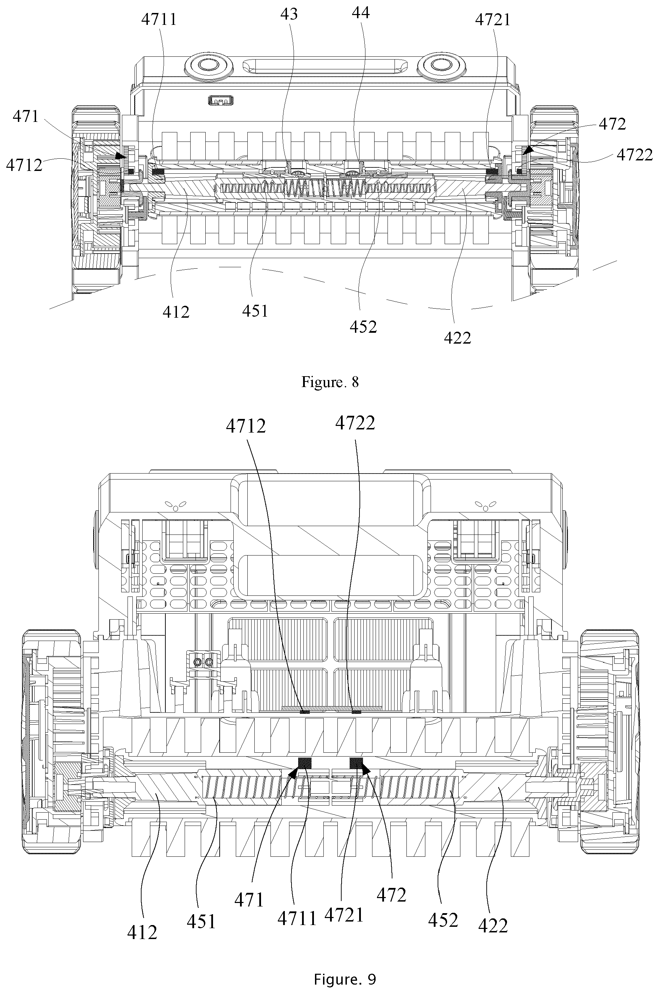

Please refer to FIG. 8, in some embodiments, the first position sensor 471 comprises a first trigger member 4711 and a first sensing member 4712. The first trigger member 4711 is provided on the roller brush mechanism 40, and a position of the first sensing member 4712 is set correspondingly to a position of the first trigger member 4711. The first sensing member 4712 is used for sensing position information of the first trigger member 4711, so as to detect the first current position information of the first operating member 43. The second position sensor 472 comprises a second trigger member 4721 and a second sensing member 4722. The second trigger member 4721 is provided on the roller brush mechanism 40, and the second sensing member 4722 is used for sensing position information of the second trigger member 4721, so as to detect the second current position information of the second operating member 44.

Exemplarily, the first trigger member 4711 and/or the second trigger member 4721 include a magnetic element or a magnet, and the first sensing member 4712 and/or the second sensing member 4722 include a Hall element.

The first position sensor 471 and the second position sensor 472 can be set in any suitable positions. For example, please refer to FIG. 8, the first trigger member 4711 and the second trigger member 4721 are respectively provided at two ends of the roller brush mechanism 40. As another example, please refer to FIG. 9, the first trigger member 4711 and the second trigger member 4721 are both provided in a middle of the roller brush mechanism 40, to facilitate arrangement of lead wires of the position detection mechanism 47. It can be understood that the first trigger member 4711 is provided on the first roller brush 41, and the first trigger member 4711 is provided at any suitable position between the two ends of the roller brush mechanism 40; and the second trigger member 4721 is provided on the second roller brush 42, and the second trigger member 4721 is provided at any suitable position between the two ends of the roller brush mechanism 40.

In some embodiments, the first trigger member 4711 and the second trigger member 4721 are both provided in the middle of the roller brush mechanism 40, a central angle between the first trigger member 4711 and the first operating portion 431 is greater than zero, and a central angle between the second trigger member 4721 and the second operating portion 441 is greater than zero, which is conducive to improving position detection accuracy of the position detection mechanism 47.

Please refer to FIG. 7, in some embodiments, the cleaning device 100 further comprises a control unit 50. The control unit 50 is signally connected to the position detection mechanism 47 and the driving mechanism 30. The control unit 50 is capable of controlling movement of the driving mechanism 30 according to the first current position information of the first operating member 43 and the second current position information of the second operating member 44 detected by the position detection mechanism 47, so as to adjust at least one of the first operating member 43 or the second operating member 44 to a suitable position, facilitating disassembly of the roller brush mechanism 40 by the user. Exemplarily, the control unit 50 includes a control circuit, a circuit board, or the like.

Please refer to FIG. 5, exemplarily, an accommodating groove 60 used for accommodating at least part of the roller brush mechanism 40 is formed in the cleaning device 100. The accommodating groove 60 can be formed in the body 10; or, the body 10 and the power mechanism 20 cooperate to form the accommodating groove 60.

In some embodiments, the cleaning device 100 comprises a cleaning mode and a removal mode. The cleaning device 100 is capable of being switched between the cleaning mode and the removal mode according to actual requirements. In the cleaning mode, the cleaning device 100 is capable of controlling movement of the driving mechanism 30, so that the driving mechanism 30 drives rotation of the roller brush mechanism 40, thereby enabling at least one of the first roller brush body 411 or the second roller brush body 421 to clean dirt. In the removal mode, the cleaning device 100 is capable of controlling movement of the driving mechanism 30 so that the driving mechanism 30 drives at least one of the first roller brush 41 or the second roller brush 42 to rotate, thereby driving at least one of the first operating member 43 or the second operating member 44 to rotate, so as to adjust position of at least one of the first operating member 43 or the second operating member 44 to a suitable position, facilitating disassembly of the roller brush mechanism 40 by the user.

In some embodiments, the first operating member 43 is capable of being moved relative to the first roller brush body 411 under action of an external force, so that the first operating member 43 is capable of driving the first telescopic member 412 to move; and the second operating member 44 is capable of being moved relative to the second roller brush body 421 under action of an external force, so that the second operating member 44 is capable of driving the second telescopic member 422 to move. In addition, the driving mechanism 30 is capable of driving the first roller brush 41 and the second roller brush 42 to rotate, and the first operating member 43 and the second operating member 44 are capable of respectively rotating with the rotation of the first roller brush 41 and the second roller brush 42.

It can be understood that when the cleaning device 100 finishes the cleaning operation in the cleaning mode, the position of the first operating member 43 (or the second operating member 44) might not be convenient for the user to detach the roller brush mechanism 40, for example, when the first operating member 43 (or the second operating member 44) faces towards an inner wall of the accommodating groove 60 or is blocked by other components of the cleaning device 100, at this time, it is difficult for the user to contact the first operating member 43 (or the second operating member 44), and thus the user cannot operate the first operating member 43 (or the second operating member 44) conveniently and quickly, and it is difficult to detach the roller brush mechanism 40 conveniently and quickly. For this reason, the embodiments of the present disclosure provide a control method for a cleaning device 100, so as to facilitate disassembly and assembly of the roller brush mechanism 40.

In some embodiments, the cleaning device 100 is used for performing steps of the control method for a cleaning device 100 according to any embodiment of the present disclosure. The cleaning device 100 comprises the cleaning device 100 according to any of the embodiments described above. Exemplarily, the cleaning device 100 comprises a driving mechanism 30 and a roller brush mechanism 40. The roller brush mechanism 40 comprises a first roller brush 41, a second roller brush 42, a first operating member 43, and a second operating member 44. The first operating member 43 is connected to the first roller brush 41, and the second operating member 44 is connected to the second roller brush 42.

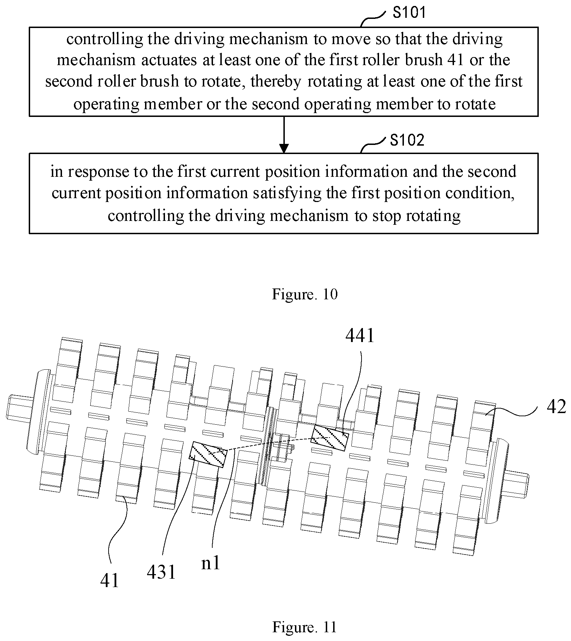

Please refer to FIG. 10, in some embodiments, the control method for a cleaning device 100 includes steps S101 and S102.

S101, controlling the driving mechanism 30 to move so that the driving mechanism 30 drives at least one of the first roller brush 41 or the second roller brush 42 to rotate, thereby driving at least one of the first operating member 43 or the second operating member 44 to rotate.

It can be understood that, in scenarios such as when maintenance or replacement of the roller brush mechanism 40 is needed, movement of the driving mechanism 30 can be controlled so that the driving mechanism 30 drives rotation of at least one of the first roller brush 41 or the second roller brush 42; when the first roller brush 41 rotates, the first operating member 43 provided at the first roller brush 41 rotates following the rotation of the first roller brush 41; when the second roller brush 42 rotates, the second operating member 44 provided at the second roller brush 42 rotates following the rotation of the second roller brush 42.

In some embodiments, upon receiving a preset removal signal, the cleaning device 100 is capable of controlling movement of the driving mechanism 30 so that the driving mechanism 30 drives at least one of the first roller brush 41 or the second roller brush 42 to rotate, thereby driving at least one of the first operating member 43 or the second operating member 44 to rotate. The preset removal signal can include at least one of: a pressing signal of a user pressing a preset key, a touch signal of the user touching a preset touch area, a gesture signal of the user, or the like.

In some embodiments, controlling movement of the driving mechanism 30 so that the driving mechanism 30 drives at least one of the first roller brush 41 or the second roller brush 42 to rotate comprises: controlling rotation of the driving mechanism 30 so that the driving mechanism 30 drives rotation of at least one of the first roller brush 41 or the second roller brush 42.

In some embodiments, the driving mechanism 30 comprises a first driving member 31 and a second driving member 32, and controlling movement of the driving mechanism 30 so that the driving mechanism 30 drives at least one of the first roller brush 41 or the second roller brush 42 to rotate, thereby driving at least one of the first operating member 43 or the second operating member 44 to rotate, comprises: controlling movement of at least one of the first driving member 31 or the second driving member 32, so as to drive rotation of at least one of the first roller brush 41 or the second roller brush 42, thereby driving rotation of at least one of the first operating member 43 or the second operating member 44. Thus, it is possible to flexibly control movement of at least one of the first driving member 31 or the second driving member 32 according to actual requirements, thereby flexibly controlling rotation of at least one of the first operating member 43 or the second operating member 44.

For example, controlling movement of the driving mechanism 30 so that the driving mechanism 30 drives at least one of the first roller brush 41 or the second roller brush 42 to rotate, thereby driving at least one of the first operating member 43 or the second operating member 44 to rotate, comprises: controlling movement of the first driving member 31, so that the first driving member 31 drives rotation of the first roller brush 41, thereby driving rotation of the first operating member 43; while the second driving member 32 does not work. As another example, controlling movement of the driving mechanism 30 so that the driving mechanism 30 drives at least one of the first roller brush 41 or the second roller brush 42 to rotate, thereby driving rotation of at least one of the first operating member 43 or the second operating member 44, comprises: controlling movement of the second driving member 32, so that the second driving member 32 drives rotation of the second roller brush 42, thereby driving rotation of the second operating member 44; while the first driving member 31 does not work. As yet another example, controlling movement of the driving mechanism 30 so that the driving mechanism 30 drives at least one of the first roller brush 41 or the second roller brush 42 to rotate, thereby driving at least one of the first operating member 43 or the second operating member 44 to rotate, comprises: controlling movement of the first driving member 31, so that the first driving member 31 drives rotation of the first roller brush 41, thereby driving rotation of the first operating member 43; and controlling movement of the second driving member 32, so that the second driving member 32 drives rotation of the second roller brush 42, thereby driving rotation of the second operating member 44.

In some embodiments, controlling movement of at least one of the first driving member 31 or the second driving member 32, to drive rotation of at least one of the first roller brush 41 or the second roller brush 42, thereby driving rotation of at least one of the first operating member 43 or the second operating member 44, comprises: controlling the first driving member 31 to move with a first motion parameter and controlling the second driving member 32 to move with a second motion parameter, so that the first driving member 31 and the second driving member 32 respectively drive rotation of the first roller brush 41 and the second roller brush 42, thereby respectively driving rotation of the first operating member 43 and the second operating member 44. Exemplarily, the first motion parameter and the second motion parameter can be the same or different.

In some embodiments, the first motion parameter includes at least one of: a first rotational angular velocity, a first rotational direction, or the like; and the second motion parameter includes at least one of: a second rotational angular velocity, a second rotational direction, or the like.

In some embodiments, controlling movement of at least one of the first driving member 31 or the second driving member 32 comprises: controlling the first driving member 31 and the second driving member 32 to move respectively at a first rotational angular velocity and a second rotational angular velocity, and the first rotational angular velocity and the second rotational angular velocity are different in magnitude. In other embodiments, the first rotational angular velocity can also be the same as the second rotational angular velocity.

Exemplarily, the first rotational angular velocity can be the same as or different from the rotational angular velocity of the first driving member 31 in a cleaning mode. The second rotational angular velocity can be the same as or different from the rotational angular velocity of the second driving member 32 in the cleaning mode.

It can be understood that, in a removal mode, the magnitudes of the first rotational angular velocity of the first driving member 31 at different times can be the same or different. Similarly, in the removal mode, the magnitudes of the second rotational angular velocity of the second driving member 32 at different times can be the same or different.

In some embodiments, the first roller brush 41 is rotatably connected to the second roller brush 42; controlling rotation of the driving mechanism 30 so that the driving mechanism 30 drives rotation of at least one of the first roller brush 41 or the second roller brush 42 comprises: controlling rotation of the driving mechanism 30, so that the driving mechanism 30 is capable of respectively and independently driving rotation of the first roller brush 41 and the second roller brush 42. Thus, it is possible to flexibly control rotation of the first roller brush 41 and the second roller brush 42 according to actual requirements, thereby flexibly controlling rotation of the first operating member 43 and the second operating member 44. Position adjustment of the first operating member 43 and position adjustment of the second operating member 44 can be performed independently, which is conducive to adjusting the positions of the first operating member 43 and/or the second operating member 44 to a required position accurately and quickly to facilitate user disassembly of the roller brush mechanism 40, and is conducive to reducing power consumption of the driving mechanism 30.

S102, in response to the first current position information and the second current position information satisfying the first position condition, controlling the driving mechanism 30 to stop rotating; wherein the first position condition comprises: a first operating portion 431 of the first operating member 43 and a second operating portion 441 of the second operating member 44 are both at least partially exposed to the outside of the cleaning device 100.

In response to the first current position information and the second current position information satisfying the first position condition, the user is capable of conveniently, quickly, and easily contacting the first operating portion 431 of the first operating member 43 and the second operating portion 441 of the second operating member 44, thereby facilitating user detachment of the roller brush mechanism 40 by operating the first operating member 43 and the second operating member 44.

Exemplarily, the first operating portion 431 of the first operating member 43 and the second operating portion 441 of the second operating member 44 are both at least partially exposed to the outside of the cleaning device 100, which includes at least one of the following: both the first operating portion 431 and the second operating portion 441 are at least partially not blocked by a cleaning body, the power mechanism 20, or the driving mechanism 30; and both the first operating portion 431 and the second operating portion 441 at least partially face away from an interior of the accommodating groove 60.

In some embodiments, the first position condition further comprises: the second operating portion 441 is located in a preset plane, the preset plane passing through an axis of the roller brush mechanism 40 and the first operating portion 431; or, the first position condition further comprises: the second operating portion 441 and the first operating portion 431 are arranged along a preset straight line, the preset straight line being parallel to the axis of the roller brush mechanism 40. Thus, the user is capable of easily and quickly operating the first operating member 43 and the second operating member 44 through a single-hand operation to respectively cause move of at least part of the first roller brush 41 (such as the first telescopic member 412) and at least part of the second roller brush 42 (such as the second telescopic member 422), so that the first roller brush 41 and the second roller brush 42 can be detached conveniently and quickly, without using both hands or other auxiliary tools, and disassembly and assembly of the roller brush mechanism 40 are convenient, quick, and simple.

Exemplarily, the preset plane is the δ plane as shown in FIG. 3(B). Exemplarily, the preset straight line is shown by the dashed line m in FIG. 1. Exemplarily, the preset straight line is parallel to an axis of the first roller brush 41 or an axis of the second roller brush 42.

Exemplarily, in response to the first current position information and the second current position information satisfying the first position condition, the user is capable of respectively applying a force on the first operating member 43 and the second operating member 44 with two fingers of the same hand, so that the first telescopic member 412 and the second telescopic member 422 at least partially retract into the first roller brush body 411 and the second roller brush body 421 respectively, thereby detaching the roller brush mechanism 40 from the driving mechanism 30, realizing single-hand disassembly and assembly of the roller brush mechanism 40; after the force applied on the first operating member 43 and the second operating member 44 is released, the first telescopic member 412 is capable of moving under an elastic force of the first elastic member 451, so that the first telescopic member 412 within the first roller brush body 411 partially extends out of the first roller brush body 411; and the second telescopic member 422 is capable of moving under an elastic force of the second elastic member 452, so that the second telescopic member 422 within the second roller brush body 421 partially extends out of the second roller brush body 421. In this way, single-hand disassembly and assembly of the roller brush mechanism 40 can be realized, and disassembly and assembly of the roller brush mechanism 40 are convenient, quick, and simple.

In some embodiments, the first position condition further comprises: a central angle of projections of the first operating portion 431 and the second operating portion 441 on a cross-section of the roller brush mechanism 40 is less than or equal to 40°. In this way, requirements for the positions of the first operating portion 431 and the second operating portion 441 are lowered, and control difficulty of the driving mechanism 30 is also lowered, which is easy to realize.

In some embodiments, controlling rotation of the driving mechanism 30 so that the driving mechanism 30 drives rotation of at least one of the first roller brush 41 or the second roller brush 42 comprises: in response to the first current position information and the second current position information satisfying a second position condition, controlling rotation of the driving mechanism 30 so that the driving mechanism 30 drives rotation of at least one of the first roller brush 41 or the second roller brush 42; wherein the second position condition comprises at least one of: at least one of the first operating portion 431 or the second operating portion 441 is not exposed to the outside of the cleaning device 100; or the second operating portion 441 is not located in the preset plane.

Exemplarily, at least one of the first operating portion 431 or the second operating portion 441 is not exposed to the outside of the cleaning device 100, which includes at least one of the following: at least one of the first operating portion 431 or the second operating portion 441 is blocked by at least one of a cleaning body, the power mechanism 20, or the driving mechanism 30; and at least one of the first operating portion 431 or the second operating portion 441 faces towards an interior of the accommodating groove 60.

In some embodiments, the first roller brush 41 comprises a first roller brush body 411 and a first telescopic member 412; the second roller brush 42 comprises a second roller brush body 421 and a second telescopic member 422; the control method further comprises: in response to the first current position information and the second current position information satisfying the first position condition, the first operating member 43 is capable of driving the first telescopic member 412 to move, so that the first roller brush 41 is capable of being detached from the driving mechanism 30; and the second operating member 44 is capable of driving the second telescopic member 422 to move, so that the second roller brush 42 is capable of being detached from the driving mechanism 30. In this way, disassembly and assembly of the roller brush mechanism 40 are simple and convenient.

In some embodiments, the roller brush mechanism 40 further comprises a first elastic member 451 and a second elastic member 452; in response to the first current position information and the second current position information satisfying the first position condition, the first operating member 43 is capable of driving the first telescopic member 412 to move along an axial direction of the first roller brush body 411, so that the first telescopic member 412 outside the first roller brush body 411 at least partially retracts into the first roller brush body 411, thereby enabling the first roller brush 41 to be detached from the driving mechanism 30; and the first telescopic member 412 is capable of applying a force to the first elastic member 451 under drive of the first operating member 43. In response to the first current position information and the second current position information satisfying the first position condition, the second operating member 44 is capable of driving the second telescopic member 422 to move along an axial direction of the second roller brush body 421, so that the second telescopic member 422 outside the second roller brush body 421 at least partially retracts into the second roller brush body 421, thereby enabling the second roller brush 42 to be detached from the driving mechanism 30; and the second telescopic member 422 is capable of applying a force to the second elastic member 452 under drive of the second operating member 44. In this way, disassembly and assembly of the roller brush mechanism 40 are convenient, easy, and fast, and after the roller brush mechanism 40 and the driving mechanism 30 are assembled, the connection between the roller brush mechanism 40 and the driving mechanism 30 is reliable.

In some embodiments, the control method for a cleaning device 100 further comprises: obtaining the first current position information of the first operating member 43 and the second current position information of the second operating member 44 detected by the position detection mechanism 47.

Exemplarily, the first current position information of the first operating member 43 and the second current position information of the second operating member 44 detected by the position detection mechanism 47 can be obtained in real time or periodically according to actual requirements.

In some embodiments, the position detection mechanism 47 comprises a first position sensor 471 and a second position sensor 472, and obtaining the first current position information of the first operating member 43 and the second current position information of the second operating member 44 detected by the position detection mechanism 47, comprises: obtaining the first current position information of the first operating member 43 detected by the first position sensor 471; and obtaining the second current position information of the second operating member 44 detected by the second position sensor 472. Thus, the first current position information of the first operating member 43 and the second current position information of the second operating member 44 can be respectively obtained from the first position sensor 471 and the second position sensor 472, reducing mutual interference when obtaining the first current position information and the second current position information, and improving detection accuracy of the first current position information and the second current position information, thereby providing a guarantee for the cleaning device 100 to accurately control the driving mechanism 30.

Exemplarily, after obtaining the first current position information of the first operating member 43 and the second current position information of the second operating member 44 detected by the position detection mechanism 47, the method further comprises:
confirming relative position information of the first operating member 43 and the second operating member 44 according to the first current position information and the second current position information; and controlling movement of the driving mechanism 30 according to the relative position information, so that the first operating member 43 and the second operating member 44 are capable of satisfying the first position condition. Exemplarily, the relative position information includes: a circumferential interval distance of projections of the second operating member 44 and the first operating member 43 on a cross-section of the roller brush mechanism 40.

In some embodiments, the control method for a cleaning device 100 further comprises: upon receiving a preset removal signal, obtaining a working state of the cleaning device 100 detected by a state sensor (not shown), the working state comprising a rotational angular velocity of the driving mechanism 30; and if a current rotational angular velocity of the driving mechanism 30 is greater than a preset speed threshold, controlling the driving mechanism 30 to perform at least two decelerations, so that the rotational angular velocity of the driving mechanism 30 after deceleration is less than or equal to the preset speed threshold, so as to reduce damage to the driving mechanism 30 caused by excessive deceleration. Exemplarily, for the rotational angular velocity of the driving mechanism 30 to be the preset speed threshold, it can avoid centrifugal splashing of liquid or stains on the roller brush mechanism 40, and improve user experience. Exemplarily, the preset speed threshold can be set according to actual requirements, for example, it is 0.3-1 s/rev, such as 0.3, 0.5, 0.7, 1, or any other suitable value between 0.3-1 s/rev. Exemplarily, the state sensor can include an encoder or the like.

In other embodiments, if the current rotational angular velocity of the driving mechanism 30 is greater than the preset speed threshold, it is also possible to control the driving mechanism 30 to perform one deceleration, so that the rotational angular velocity of the driving mechanism 30 after deceleration is less than or equal to the preset speed threshold.

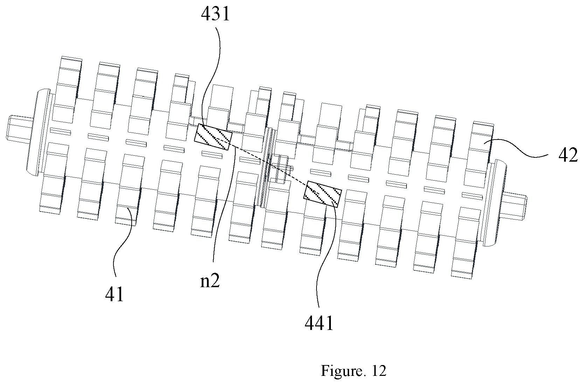

In some embodiments, the control method further comprises: obtaining hand usage habits set by the user, and determining a relative positional relationship between the first operating portion 431 and the second operating portion 441 according to the hand usage habits. The relative positional relationship includes a first relative positional relationship or a second relative positional relationship; the first relative positional relationship includes: the first operating portion 431 and the second operating portion 441 are spaced apart along a first line n1, and the first operating portion 431 is closer to the bottom of the cleaning device 100 than the second operating portion 441; the second relative positional relationship includes: the first operating portion 431 and the second operating portion 441 are spaced apart along a second line n2, and the second operating portion 441 is closer to the bottom of the cleaning device 100 than the first operating portion 431, and the first line and the second line intersect. For example, please refer to FIG. 11, the first relative positional relationship includes: the first operating portion 431 and the second operating portion 441 are spaced apart along the first line n1, and the first operating portion 431 is closer to the bottom of the cleaning device 100 than the second operating portion 441; if the cleaning device 100 obtains a hand usage habit corresponding to the first relative positional relationship, movement of the driving mechanism 30 is controlled so that the driving mechanism 30 drives movement of the first operating member 43 and the second operating member 44 to the first relative positional relationship, which is convenient for a user habituated to using the right hand to operate the first operating portion 431 and the second operating portion 441, thereby causing the first operating member 43 and the second operating member 44 to respectively drive movement of the first roller brush and the second roller brush, and then conveniently detaching the first roller brush and the second roller brush, making removal of the roller brush mechanism 40 simple, easy, and convenient. As another example, please refer to FIG. 12, the second relative positional relationship includes: the first operating portion 431 and the second operating portion 441 are spaced apart along the second line n2, and the second operating portion 441 is closer to the bottom of the cleaning device 100 than the first operating portion 431; if the cleaning device 100 obtains a hand usage habit corresponding to the second relative positional relationship, movement of the driving mechanism 30 is controlled so that the driving mechanism 30 drives movement of the first operating member 43 and the second operating member 44 to the second relative positional relationship, which is convenient for a user habituated to using the left hand to operate the first operating portion 431 and the second operating portion 441, thereby causing the first operating member 43 and the second operating member 44 to respectively drive move of the first roller brush and the second roller brush, and then conveniently detaching the first roller brush and the second roller brush, making removal of the roller brush mechanism 40 simple, easy, and convenient. Thus, the user can control the driving mechanism 30 to adjust the relative position of the first operating member 43 and the second operating member 44 according to his/her own hand usage habits, which improves user experience.

In some embodiments, the control method for a cleaning device 100 further comprises: upon receiving a preset removal signal, obtaining a working state of the cleaning device 100 detected by a state sensor, the working state including a first state and a second state, and the second state including a rollover state or a flip state. When the working state of the cleaning device 100 is the first state, the driving mechanism 30 is controlled to work so that the cleaning device 100 switches to the second state. The cleaning device 100 is capable of performing a cleaning operation in the first state, and an area of the first operating portion 431 exposed to the outside when the cleaning device 100 is in the second state is larger than an area of the first operating portion 431 exposed to the outside when the cleaning device 100 is in the first state, and an area of the second operating portion 441 exposed to the outside when the cleaning device 100 is in the second state is larger than an area of the second operating portion 441 exposed to the outside when the cleaning device 100 is in the first state. When the cleaning device 100 is in the second state, the exposed area of the first operating portion 431 and the second operating portion 441 is larger, thereby providing a larger operating space and facilitating disassembly of the roller brush mechanism 40 by the user. Exemplarily, the working state includes a position of the cleaning device 100 relative to a surface to be cleaned, for example, when the cleaning device 100 is in the first state, both driving wheels 21 and driven wheels 22 of the cleaning device 100 are in contact with the surface to be cleaned; and when the cleaning device 100 is in the second state, at least one of the two driving wheels 21 and the two driven wheels 22 of the cleaning device 100 is not in contact with the surface to be cleaned. The working state can also include a rotational angular velocity of the driving mechanism 30.

It can be understood that the execution subject of the control method for a cleaning device 100 in any embodiment of the present disclosure can be a control unit 50 of the cleaning device 100, or can also be another controller, such as a controller of an external device, or the like.

The control method for a cleaning device 100 in the embodiments described above controls movement of the driving mechanism 30 so that the driving mechanism 30 drives rotation of at least one of the first roller brush 41 or the second roller brush 42, thereby driving rotation of at least one of the first operating member 43 or the second operating member 44; obtains first current position information of the first operating member 43 and second current position information of the second operating member 44 detected by the position detection mechanism 47; and in response to the first current position information and the second current position information satisfying a first position condition, controls the driving mechanism 30 to stop rotating. At this time, the user is capable of conveniently operating the first operating member 43 and the second operating member 44 to respectively drive movement of at least part of the first roller brush 41 and at least part of the second roller brush 42, thereby being capable of conveniently detaching the first roller brush 41 and the second roller brush 42, and the removal of the roller brush mechanism 40 is convenient, easy, and simple.

In the description of the present disclosure, it should be noted that, unless otherwise clearly specified and limited, terms such as "installation", "connected", "connection", "mechanically coupled", and "coupled" should be understood in a broad sense, for example, they can be fixed connections, detachable connections, or integrated connections. They can be mechanical connections or electrical connections. They can be directly connected, or indirectly connected through an intermediary, or can be communication between interiors of two elements or an interaction relationship between two elements. Mechanical coupling or coupling of two components includes direct coupling and indirect coupling, for example, direct fixed connection, connection through a transmission mechanism, etc. For those of ordinary skill in the art, the specific meanings of the above terms in the present disclosure can be understood according to specific situations.

In the present disclosure, unless otherwise clearly specified and limited, a first feature being "above" or "below" a second feature can include that the first and second features are in direct contact, and can also include that the first and second features are not in direct contact but are in contact through another feature between them. Moreover, the first feature being "over", "above", and "on top of" the second feature includes that the first feature is directly above and obliquely above the second feature, or only indicates that the horizontal height of the first feature is higher than that of the second feature. The first feature being "under", "below", and "beneath" the second feature includes that the first feature is directly below and obliquely below the second feature, or only indicates that the horizontal height of the first feature is smaller than that of the second feature.

The disclosure above provides many different embodiments or examples used to implement different structures of the present disclosure. To simplify the disclosure of the present disclosure, components and settings of specific examples are described above. Of course, they are only examples and are not intended to limit the present disclosure. In addition, the present disclosure may repeat reference numbers and/or reference letters in different examples, and this repetition is for the purpose of simplicity and clarity, and does not in itself indicate the relationship between various embodiments and/or settings discussed. Furthermore, the present disclosure provides examples of various specific processes and materials, but those of ordinary skill in the art may realize the application of other processes and/or the use of other materials.

In the description of the present specification, descriptions referring to the terms "an embodiment", "some embodiments", "schematic embodiments", "examples", "specific examples", or "some examples", etc., mean that specific method steps, features, structures, materials, or characteristics described in connection with the embodiment or example are included in at least one embodiment or example of the present disclosure. In the present specification, the schematic expressions of the above terms do not necessarily refer to the same embodiment or example. Moreover, the described specific method steps, features, structures, materials, or characteristics can be combined in any suitable manner in any one or more embodiments or examples.

The contents described above are only specific embodiments of the present disclosure, but the protection scope of the present disclosure is not limited thereto. Any person skilled in the art can easily think of various equivalent modifications or replacements within the technical scope disclosed in the present disclosure, and all these modifications or replacements shall be covered within the protection scope of the present disclosure. Therefore, the protection scope of the present disclosure shall be subject to the protection scope of the claims.

## Claims

1. A control method for a cleaning device, wherein the cleaning device comprises a driving mechanism and a roller brush mechanism, the roller brush mechanism comprises a first roller brush, a second roller brush, a first operating member, and a second operating member, the first operating member is connected to the first roller brush, and the second operating member is connected to the second roller brush; the control method comprises:
controlling the driving mechanism to move so that the driving mechanism drives at least one of the first roller brush or the second roller brush to rotate, driving at least one of the first operating member or the second operating member to rotate; and
when first current position information of the first operating member and second current position information of the second operating member satisfying a first position condition, controlling the driving mechanism to stop rotating; wherein the first position condition comprises: a first operating portion of the first operating member and a second operating portion of the second operating member are both at least partially exposed to the outside of the cleaning device.

2. The control method according to claim 1, wherein the first position condition further comprises: the second operating portion is located in a preset plane, the preset plane passing through an axis of the roller brush mechanism and the first operating portion; or
the first position condition further comprises: the second operating portion and the first operating portion are arranged along a preset straight line, the preset straight line being parallel to the axis of the roller brush mechanism.

3. The control method according to claim 2, wherein controlling the driving mechanism to rotate so that the driving mechanism drives at least one of the first roller brush or the second roller brush to rotate comprises:
when the first current position information and the second current position information satisfying a second position condition, controlling the driving mechanism to rotate, so as to cause the driving mechanism to drive at least one of the first roller brush or the second roller brush to rotate; wherein the second position condition comprises at least one of: at least one of the first operating portion or the second operating portion is not exposed to the outside of the cleaning device; and the second operating portion is not located in the preset plane.

4. The control method according to claim 1, wherein the first position condition further comprises: a central angle of projections of the first operating portion and the second operating portion on a cross-section of the roller brush mechanism is less than or equal to 40°.

5. The control method according to claim 1, wherein the first roller brush comprises a first roller brush body and a first telescopic member; the second roller brush comprises a second roller brush body and a second telescopic member; the control method further comprises:
when the first current position information and the second current position information satisfying the first position condition, the first operating member is configured to drive the first telescopic member to move, so that the first roller brush is detached from the driving mechanism; and the second operating member is configured to drive the second telescopic member to move, so that the second roller brush is detached from the driving mechanism.

6. The control method according to claim 1, wherein the driving mechanism comprises a first driving member and a second driving member, controlling the driving mechanism to move so that the driving mechanism drives at least one of the first roller brush or the second roller brush to rotate, thereby driving at least one of the first operating member or the second operating member to rotate, comprises:
controlling at least one of the first driving member or the second driving member to move, to drive at least one of the first roller brush or the second roller brush to rotate, thereby driving at least one of the first operating member or the second operating member to rotate.

7. The control method according to claim 6, wherein controlling the at least one of the first driving member or the second driving member to move, to drive the at least one of the first roller brush or the second roller brush to rotate, thereby driving the at least one of the first operating member or the second operating member to rotate, comprises:
controlling the first driving member to move with a first motion parameter and controlling the second driving member to move with a second motion parameter, so that the first driving member and the second driving member respectively drive the first roller brush and the second roller brush to rotate, thereby respectively driving the first operating member and the second operating member to rotate.

8. The control method according to claim 7, wherein the first motion parameter comprises at least one of: a first rotational angular velocity and a first rotational direction; and the second motion parameter comprises at least one of: a second rotational angular velocity and a second rotational direction.

9. The control method according to claim 6, wherein controlling the at least one of the first driving member or the second driving member to move, comprises:
controlling the first driving member and the second driving member to move respectively at a first rotational angular velocity and a second rotational angular velocity, the first rotational angular velocity being different from the second rotational angular velocity in magnitude.

10. The control method according to claim 1, wherein the first roller brush is rotatably connected to the second roller brush; controlling the driving mechanism to move so that the driving mechanism drives the at least one of the first roller brush or the second roller brush to rotate comprises:
controlling the driving mechanism to move, so that the driving mechanism is capable of respectively and independently driving the first roller brush and the second roller brush to rotate.

11. The control method according to any one of claims 1-10, wherein it further comprises:
obtaining the first current position information of the first operating member and the second current position information of the second operating member detected by a position detection mechanism.

12. The control method according to any one of claims 1-10, wherein it further comprises:
upon receiving a preset removal signal, obtaining a working state of the cleaning device detected by a state sensor, the working state comprising a rotational angular velocity of the driving mechanism; and
if a current rotational angular velocity of the driving mechanism is greater than a preset speed threshold, controlling the driving mechanism to perform at least two decelerations, so that the rotational angular velocity of the driving mechanism after deceleration is less than or equal to the preset speed threshold.

13. The control method according to claims 1-10, wherein the control method further comprises:
Obtaining hand usage habits set by a user; and determining a relative positional relationship between the first operating portion and the second operating portion according to the hand usage habits, the relative positional relationship comprising a first relative positional relationship or a second relative positional relationship; wherein the first relative positional relationship comprises: the first operating portion and the second operating portion are spaced apart along a first line, and the first operating portion is closer to a bottom of the cleaning device than the second operating portion; and the second relative positional relationship comprises: the first operating portion and the second operating portion are spaced apart along a second line, and the second operating portion is closer to the bottom of the cleaning device than the first operating portion, the first line and the second line intersecting.

14. The control method according to claims 1-10, wherein the control method further comprises:
in response to receiving a preset removal signal, obtaining a working state of the cleaning device detected by a state sensor, the working state comprising a first state and a second state, the second state comprising a rollover state or a flip state; wherein the cleaning device is capable of performing a cleaning operation in the first state, an area of the first operating portion exposed to the outside when the cleaning device is in the second state is greater than an area of the first operating portion exposed to the outside when the cleaning device is in the first state, and an area of the second operating portion exposed to the outside when the cleaning device is in the second state is greater than an area of the second operating portion exposed to the outside when the cleaning device is in the first state; and
in response to the working state of the cleaning device being the first state, controlling the driving mechanism to work so that the cleaning device switches to the second state.

15. A cleaning device (100), wherein it comprises:
a driving mechanism (30); and
a roller brush mechanism (40), comprising a first roller brush (41), a second roller brush (42), a first operating member (43), and a second operating member (44), the first operating member (43) being connected to the first roller brush (41), and the second operating member (44) being connected to the second roller brush (42);
wherein the cleaning device (100) is used for performing steps of the control method according to any one of claims 1-14.

16. The cleaning device (100) according to claim 15, wherein the cleaning device (100) further comprises:
a first position sensor (471), comprising a first trigger member (4711) and a first sensing member (4712), the first trigger member (4711) being disposed on the roller brush mechanism (40), a position of the first sensing member (4712) being set corresponding to a position of the first trigger member (4711), and the first sensing member (4712) being configured to sense position information of the first trigger member (4711), so as to detect the first current position information of the first operating member (43); and
a second position sensor (472), comprising a second trigger member (4721) and a second sensing member (4722), the second trigger member (4721) being disposed on the roller brush mechanism (40), and the second sensing member (4722) being configured to sense position information of the second trigger member (4721), so as to detect the second current position information of the second operating member (44).

17. The cleaning device (100) according to claim 16, wherein the first trigger member (4711) and the second trigger member (4721) are respectively disposed at two ends of the roller brush mechanism (40); or, the first trigger member (4711) and the second trigger member (4721) are both disposed in a middle of the roller brush mechanism (40).

18. The cleaning device (100) according to claim 17, wherein the first trigger member (4711) and the second trigger member (4721) are both disposed in the middle of the roller brush mechanism (40), a central angle between the first trigger member (4711) and a first operating portion (431) is greater than zero, and a central angle between the second trigger member (4721) and a second operating portion (441) is greater than zero.
